# EUROPÄISCHE PATENTANMELDUNG

(11) **EP 2 027 922 A1**
(43) Veröffentlichungstag der Anmeldung: **25.02.2009**
(21) Anmeldenummer: 07113714.5
(22) Anmeldetag: 02.08.2007
(51) Int. Cl.: B01L 3/00, G01N 1/36, A61B 10/02

(54) **Verfahren und Vorrichtung für das Fixieren/Stabilisieren einer Probe**

(71) Anmelder: Qiagen GmbH, 40724 Hilden (DE)
(72) Erfinder: Grölz, Daniel, 42697, Solingen (DE); Lenz, Christian, 40235, Düsseldorf (DE); Holländer, Vera, 59423, Unna (DE); Rothmann, Thomas, 40764, Langenfeld (DE)
(74) Vertreter: Gille Hrabal Struck Neidlein Prop Roos

(57) **Zusammenfassung**

Die Erfindung betrifft ein Verfahren und eine Vorrichtung für die Fixierung und / oder Stabilisierung einer Probe. Biomoleküle sowie Gewebe werden stabilisiert bzw. fixiert, also haltbar gemacht. Zu stabilisierende Biomoleküle sind insbesondere DNA, RNA sowie Proteine.

Aufgabe der Erfindung ist es, Biomoleküle sowie Gewebe verbessert zu fixieren und/ oder zu stabilisieren und in einer Ausgestaltung vereinfacht untersuchen zu können,

Eine Probe wird zur Lösung der Aufgabe in einen durchströmbaren Behälter mit einer maximalen Bauhöhe von 10 mm, vorzugsweise von 5 mm gegeben. Dies wird erreicht, indem die Probe zunächst geeignet dimensioniert wird, so zum Beispiel mit Hilfe eines Skalpells, Der mit der Probe befüllte durchströmbare Behälter wird in Mittel zur Fixierung und/ oder Stabilisierung eingetaucht. Als Folge wird die Probe fixiert und/ oder stabilisiert.

Zur Lösung der Aufgabe wird ferner ein durchströmbarer Behälter mit der vorgenannten Bauhöhe bereitgestellt.

## Beschreibung

Die Erfindung betrifft ein Verfahren und eine Vorrichtung für die Fixierung und / oder Stabilisierung einer Probe. Es werden Biomoleküle stabilisiert und/ oder Gewebe fixiert, also haltbar gemacht Zu stabilisierende Biomoleküle sind insbesondere DNA, RNA sowie Proteine.

Um eine biologische Probe stabilisieren zu können, ist es besonders wichtig, dass eine Stabilisierungslösung bzw. Stabilisierungsflüssigkeit die Probe, die die Biomoleküle enthält, schnell genug durchdringt, Insbesondere wenn es sich bei der biologischen Probe um ein Gewebe handelt, ist es von Vorteil, dass das Gewebe von einer Fixierlösung bzw. Fixierflüssigkeit schnell genug durchdrungen wird, um das Gewebe erfolgreich zu fixieren.

Nach dem Stand der Technik gibt ein Hersteller einer Stabilisierungslösung vor, welche Randbedingungen bei der Stabilisierung zu beachten sind, So gibt ein Hersteller einer Stabilisierungslösung beispielsweise an, welche Dimensionen eine Probe nicht überschreiten darf, damit bestimmte Biomoleküle zum Beispiel RNA an jeder Stelle der Probe gleichermaßen stabilisiert werden. Eine solche Angabe besteht beispielsweise darin, dass eine bestimmte Dicke vorgegeben wird, die eine Probe nicht überschreiten darf, um die gewünschte Stabilisierung zu erreichen, In einigen Fällen werden auch weitere geometrische Angaben hinzugefügt. Beispielsweise ein Laborant muss dann beispielsweise mithilfe eines Skalpells eine Probe in die gewünschte Größe bringen, bevor die Probe in eine Stabilisierungslösung gegeben wird. Zusätzlich geben Hersteller in vielen Fällen ergänzend an, welches Verhältnis zwischen Stabilisierungslösung und Probe einzuhalten ist, um eine gewünschte Stabilisierung zu erreichen.

Soll Gewebe fixiert werden, so werden häufig keine zu beachtenden Randbedingungen für die Fixierung vom Hersteller angegeben und zwar insbesondere dann, wenn das Gewebe für histologische Untersuchungen fixiert werden soll. Für histologische Untersuchungen wird in der Regel Formalin als Fixierlösung eingesetzt. Das gewünschte Gewebe wird dann in Formalin eingelegt und so fixiert.

Auch wenn bei der Fixierung mit Fixierlösungen, welche Formaldehyd enthalten wie zum Beispiel Formalin in der Regel keine Vorgaben gemacht werden, so macht sich eine zu große Größe einer Probe im Fall der Stabilisierung von Gewebe doch nachteilhaft bemerkbar. Auch bei Formaldehyd enthaltenden Fixierlösungen ist es daher ratsam, bestimmte Größen bzw. Dimensionen nicht zu überschreiten, um ein Gewebe erfolgreich zu fixieren.

Die Druckschrift US 7,1 47,826 B2 offenbart das Vorsehen eines verschließbaren, durchströmbaren Korbes, der in ein weiteres Gefäß mit einer darin befindlichen Stabilisierungslösung hinein gestellt werden soll, Von allen Seiten kann Flüssigkeit in den durchströmbaren Korb eindringen. Befindet sich eine zu stabilisierende biologische Probe im Korb, so soll so sichergestellt werden, dass die Stabilisierungslösung von allen Seiten an die Probe gelangen kann.

Die Druckschrift US 2003/0087423 A1 offenbart ebenfalls das Vorsehen eines durchströmbaren Korbs für eine biologische Probe. Allerdings wird hier der Korb an einem Deckel des Gefäßes befestigt, um so die Handhabung zu erleichtern. Wiederum soll eine im Korb befindliche Probe zuverlässig und vollständig von allen Seiten von einer Lösung erreicht werden können.

Aus dem Stand der Technik sind unter dem Markennamen "Histosette" aus Kunststoff bestehende Kassetten mit aufklappbarem Deckel bekannt, die für die Aufnahme von Gewebeproben für Prozessierung oder Entwässerung des Gewebes vorgesehen sind. Die Fläche des Bodens bzw. Deckels einer Histosette beträgt wenigstens 3 cm * 2,5 cm. Eine solche Kassette ist wenigstens 0,5 cm hoch bzw. dick. Boden und Deckel sind siebförmig ausgestaltet oder mit einer Vielzahl von Schlitzen versehen, damit Flüssigkeit in die Kassette beispielsweise während einer Entwässerung eines Gewebes gelangen kann.

Werden Histosetten eingesetzt, um Gewebe zu entwässern, um so beispielsweise im Anschluss daran histologische Untersuchungen durchführen zu können, so wird bereits fixiertes Gewebe, welches zuvor beispielsweise in Formalin eingelegt war, zunächst auf die gewünschte passende Größe für die Histosette zurechtgeschnitten. Anschließend wird das Gewebe in die Histosette hineingelegt und die Histosette verschlossen. Nun wird die Histosette zusammen mit dem darin befindlichen Gewebe in einen Automaten gegeben, in dem eine Entwässerung automatisiert durchgeführt wird.

Die beispielsweise in dem genannten Automaten vorgesehenen Entwässerungsschritte können umfassen, dass das bereits fixierte Gewebe noch einmal mit einer Fixierlösung behandelt wird. Das Gewebe wird dadurch allerdings nicht im Sinne der vorliegenden Erfindung fixiert, da das Gewebe zuvor bereits fixiert worden ist. Danach wird die Histosette mit dem darin befindlichen Gewebe nacheinander in verschiedene Alkoholbäder mit zunehmend höherer Alkoholkonzentration getaucht. Durch Alkohol wird dem Gewebe das darin befindliche Wasser entzogen. Damit die Entwässerung des Gewebes schonend verläuft, wird die Alkoholkonzentration nur langsam von Bad zu Bad gesteigert.

Anschließend wird die Histosette mit dem darin befindlichen Gewebe in ein Intermediärmedium wie zum Beispiel Xylol getaucht. Das Intermediärmedium verdrängt den im Gewebe befindlichen Alkohol, Im Unterschied zum Alkohol ist das Intermediärmedium mit Paraffin mischbar, was die nachfolgende Paraffinbehandlung vorbereitet.

Im Anschluss daran wird die Histosette mit dem darin befindlichen Gewebe nämlich in heißes und damit flüssiges Paraffin getaucht. Paraffin dringt dann in das Gewebe ein. Ist das Paraffin in gewünschter Weise in das Gewebe eingedrungen, so wird die Histosette aus dem Automaten herausgeholt. Das dann bereits leicht ausgehärtete Paraffin mit dem darin befindlichen Gewebestück wird anschließend in ein Förmchen, also einen nach oben hin offenen, kleinen Behälter überführt und mit heißem, flüssigem Paraffin überschichtet, um so nach dem Erkalten des Paraffins einen Paraffinblock zu erhalten, in dem sich das Gewebe befindet. Erkaltet dieses Paraffin, so liegt eine in Paraffin eingebettete, entwässerte Probe vor. Zur Durchführung von histologischen Untersuchungen werden mikrometerdünne Gewebsschnitte hergestellt. Diese Gewebeschnitte können auf Objektträger aufgezogen, entparaffiniert, gefärbt und mit Hilfe eines Mikroskops beurteilt werden. Ein Nachteil der Fixierung mit formaldehydhaltigen Fixierlösungen besteht darin, dass Biomoleküle zum Teil irreversibel kreuzvernetzt und damit zerstört werden. Die Isolierung von Biomolekülen für analytische Untersuchungen wird dadurch erschwert oder unmöglich gemacht.

Aufgabe der Erfindung ist es, Biomoleküle sowie Gewebe verbessert zu stabilisieren bzw, zu fixieren und in einer Ausgestaltung vereinfacht untersuchen zu können.

Die Aufgabe der Erfindung wird mit einem Verfahren mit den Merkmalen des Anspruchs 1 gelöst. Ein Gegenstand zur Durchführung des Verfahrens umfasst die Merkmale des Nebenanspruchs. Vorteilhafte Ausgestaltungen ergeben sich aus den Unteransprüchen.

Eine Probe wird in einen durchströmbaren Behälter mit einer maximalen Bauhöhe von 10 mm, vorzugsweise von 5 mm gegeben. Dies wird erreicht, indem die Probe zunächst geeignet dimensioniert wird, so zum Beispiel mit Hilfe eines Skalpells, Der mit der Probe befüllte Behälter wird in Mittel für das Fixieren und/ oder Stabilisieren eingetaucht. Als Folge wird die Probe fixiert und/ oder stabilisiert.

Ein Behälter im Sinne des Hauptanspruchs weist eine maximale Bauhöhe von 10 mm bzw, 5 mm auf, wenn zwei Innenwände oder aber entsprechend Boden und Deckel des Behälters nicht mehr als 10 mm bzw, 5 mm auseinander liegen. Befindet sich die Probe in diesem Behälter, so wird dadurch sichergestellt, dass flüssige Fixiermittel und/ oder Stabilisierungsmittel die im Behälter befindliche Probe schnell zu durchdringen vermögen und zwar in besonders guter Weise, wenn die Bauhöhe nicht mehr als 5 mm beträgt. Da der Behälter durchströmt werden kann, kann flüssiges Fixiermittel und/ oder Stabilisierungsmittel, die in Form von ein oder mehreren Lösungen vorliegen können, in das Innere des Behälters gelangen und in die Probe eindringen. Erst durch das Eintauchen bzw. als Folge davon wird die im durchströmbaren Behälter befindliche Probe fixiert bzw. stabilisiert. Dies umfasst, dass die Probe zuvor noch nicht fixiert sowie stabilisiert war.

Vorzugsweise sind die beiden Wände bzw. Boden und Deckel des durchströmbaren Behälters siebförmig ausgestaltet oder mit Schlitzen und dergleichen versehen, die nicht mehr als 10 mm, vorzugsweise nicht mehr 5 mm auseinanderliegen. Bei dieser Ausgestaltung wird weiter verbessert sichergestellt, dass die im durchströmbaren Behälter befindliche Probe ordnungsgemäß fixiert und/ oder stabilisiert wird.

In einer Ausgestaltung der Erfindung sind die Dimensionen des durchströmbaren Behälters so gewählt, dass der durchströmbare Behälter in einen Entwässerungsautomaten eingesetzt werden kann, um die im durchströmbaren Behälter befindliche Probe im Anschluss an die Fixierung bzw. Stabilisierung zu entwässern. Die Probe muss dann nicht von einem durchströmbaren Behälter in einen weiteren Behälter umgefüllt werden, wenn die Probe im Anschluss an eine Fixierung bzw. Stabilisierung entwässert werden soll. Ein Arbeitsschritt wird so vermieden. Es kann aber auch eine Fixierung und/ oder Stabilisierung im Entwässerungsautomaten durchgeführt werden. Die noch nicht fixierte bzw. stabilisierte Probe wird durch den Entwässerungsautomaten zuerst in eine Fixierlösung und/ oder Stabilisierungslösung oder vergleichbare Mittel getaucht. Dies ist vor allem dann wirtschaftlich sinnvoll, wenn die Probe hinreichend dünn ist und daher eine Fixierung bzw. Stabilisierung relativ schnell erreicht werden kann.

Als Fixiermittel kann Formalin verwendet werden, falls lediglich histologische Untersuchungen durchgeführt werden sollen. Sollen hingegen Biomoleküle für nachfolgende Untersuchungen stabilisiert, also haltbar gemacht werden, so ist eine geeignete Stabilisierungslösung bzw. Stabilisierungsmittel auszuwählen, da dies mit Formalin nicht möglich ist. Für die Stabilisierung der RNA einer Probe kann RNAlater® der US-Fa. Ambion als Stabilisierungslösung eingesetzt werden. Ein anderes Beispiel für die gleichzeitige Stabilisierung von DNA, RNA und Proteinen ist die Stabilisierungslösung Allprotect^{™} Tissue Reagenz der deutschen Fa. Qiagen GmbH. Die beiden genannten Beispiele sind also Stabilisierungsmittel im Sinne der vorliegenden Lehre.

Nach dem Stand der Technik wird eine Probe ganz oder teilweise beispielweise mit Hilfe von Formalin fixiert, wenn die Probe histologisch untersucht werden soll. Ein nicht fixierter Teil dieser Probe wird mit einem Stabilisierungsmittel behandelt, wenn ergänzend Biomoleküle stabilisiert werden sollen. Das erfindungsgemäße Verfahren ermöglicht demgegenüber eine Vereinfachung von nachfolgenden Arbeitsabläufen vor allem dann, wenn die im Behälter befindliche Probe mit einem Fixier- und Stabilisierungsmittel behandelt wird, das zugleich das Gewebe einer Probe fixiert sowie Biomoleküle dieser Probe stabilisiert. Daher wird in einer bevorzugten Ausgestaltung die Lösung bzw. Flüssigkeit so ausgewählt, dass Biomoleküle und Gewebe zugleich haltbar gemacht werden.

Bevorzugt wird daher als Mittel für das Fixieren und Stabilisieren einer Probe eine Polyol-haltige Zusammensetzung eingesetzt. Denn mit einer solchen Zusammensetzung gelingt das Fixieren sowie Stabilisieren besonders gut und einfach, wie der Druckschrift EP 1 804 045 A1 zu entnehmen ist. Den Offenbarungsgehalt dieser Druckschrift, der weitere vorteilhafte Ausgestaltungen eines solchen Mittels zu entnehmen sind, beziehen wir hiermit als vorteilhafte Ausgestaltung des beanspruchten Verfahrens mit ein.

Um eine biologische Probe zugleich zu stabilisieren und zu fixieren, wird die Probe insbesondere in beanspruchter Weise mit einer Zusammensetzung in Kontakt gebracht, umfassend 1 bis zu 100 Gew,-% mindestens eines Polyols sowie 0 bis 99 Gew,-% mindestens eines Additivs, wobei die Gesamtmenge der beiden genannten Komponenten 100 Gew,-% beträgt,

Bei dem Polyol handelt es sich insbesondere um einen Diol, Triol, Tetraol, Pentaol, Hexaol, Heptaol, Octaol oder Nonaol, wobei Diol oder Triol besonders zu bevorzugen sind. Vorzugsweise weist der Polyol 2 bis 20 Kohlenstoffatome auf.

Der Polyol ist in einer vorteilhaften Ausgestaltung ausgewählt aus der Gruppe umfassend 1,2-Ethandiol, 1 ,2-Propandiol, 1 ,3-Propandiol, 1 ,2-Butandiol, 1,3-Butandiol, 1,4-Butandiol, 2,3-Butandiol, 1 ,2-Pentandiol, 1,3-Pentandiol, 1,4-Pentandiol, 1 ,5-Pentandiol, 2,3-Pentandiol, 2,4-Pentandiol, 1 ,2-Hexaudiol, 1 ,3-Hexandiol, 1,4-Hexandiol, 1,5-Hexandiol, 1,6-Hexandiol, 2,3-Hexandiol, 2,4-Hexandiol, 2,5-Hexandiol, 3,4-Hexandiol, 1 ,2,3-Propantriol, 1,2,3-Butantriol, 1 ,2,4-Butantriol, 1,2,3-Pentantriol, 1,2,4-Pentantriol, 1,2,5-Pentantriol, 2,3,4-Pentantriol, 1,2,3-Hexantriol, 1,2,4-Hexantriol, 1,2,5-Hexanttiol, 1,2,6-Hexantriol, 2,3,4-Hexantriol, 2,3,5-Hexantriol, 3-Methyl-1 ,3,5-Pentantriol, Trimethylolpropanol, Pentaerythritol, Diethylenglykol, Dipropylenglykol, Triethylenglykol, Tripropylenglykol, Polyethylenglykol und Polypropylenglykol.

Die Zusammensetzung umfasst besonders bevorzugt eine Mischung aus mindestens zwei Polyolen.

Das Additiv ist vorzugsweise ausgewählt aus der Gruppe umfassend Detergentien, Inhibitoren, welche den Abbau von Nukleinsäuren oder Proteinen hemmen, Viskositätsregulierer, Farbstoffe, Pufferverbindungen, Konservierungsstoffe, Komplexbildner, Reduktionsmittel, Substanzen, welche die Permeabilität von Zellen verbessern, chaotrope Substanzen, Fixative, weitere, von Polyolen verschiedene Lösungsmittel sowie Mischungen aus mindestens zwei dieser Additive.

In einer Ausgestaltung umfasst das Verfahren eine histologische Analyse der mit der Zusammensetzung in Kontakt gebrachten biologischen Probe und/oder Analyse von Biomolekülen in der oder aus der mit der Zusammensetzung in Kontakt gebrachten biologischen Probe.

Vorzugsweise ist die Analyse von Proteinen als auch die Analyse von Nukleinsäuren umfasst.

In einer Ausgestaltung beinhaltet die Probe Organismen, isolierte Zellen, Organellen, Bakterien, Pilze oder Teile von Pilzen, Viren, Viroide, Prionen, Gewebe, Gewebefragmente, Gewebeschnitte, Körperflüssigkeiten, natürliche, gegebenenfalls isolierte Proteine, synthetische oder modifizierte Proteine, natürliche, gegebenenfalls isolierte Nukleinsäuren, synthetische oder modifizierte Nukleinsäuren, andere Biomoleküle wie z: B. Lipide, Kohlenhydrate, Stoffwechselprodukte und Metaboliten, Pflanzen oder Teile von Pflanzen, Fäkalien, Abstriche, Punktate, Lebensmittelproben, Umweltproben und/ oder forensische Proben.

Vorteile und weitere Einzelheiten zu den verschiedenen Ausgestaltungen ergeben sich aus der EP 1 804 045 A1.

Ein Mittel, das bei einer Probe sowohl die Morphologie des Gewebes fixiert als auch Biomoleküle stabilisiert, wird insbesondere dann gewählt, wenn zunächst die Histologie des Gewebes untersucht wird und im Anschluss daran in Abhängigkeit von histologischen Untersuchungsergebnissen darüber hinaus optional Biomoleküle isoliert und analysiert werden sollen,

In einer Ausgestaltung wird der durchströmbare Behälter ganz oder teilweise im Anschluss an einen Wasserentzug mit einem Paraffinblock verbunden, in den die zunächst fixierte und/ oder stabilisierte und im Anschluss daran entwässerte Probe in einer aus dem Stand der Technik bekannten Weise gebracht worden ist. Das Verbinden kann erreicht werden, indem der durchströmbare Behälter ganz oder teilweise auf ein Förmchen mit einer durchströmbaren Wand aufgesetzt wird, in dem die bereits mit Paraffin versehene Probe in Paraffin eingetaucht ist. Von oben durch die durchströmbare Wand hindurch wird noch weiter Paraffin hinzuzugeben. Durch die durchströmbare Wand hindurch gelangt Paraffin zusätzlich von dem Behälter oder Behälterteil in das Förmchen hinein und umschließt die durchströmbare Wand. Nach dem Erkalten des Paraffins ist der Behälter bzw. ein Teil des Behälters mit diesem Paraffinblock verbunden.

Der Behälter bzw. der mit dem Paraffinblock verbundene Teil davon bildet nun einen Griff oder eine Halterung, mit der der Paraffinblock mit der darin befindlichen Probe aus dem Förmchen herausgenommen werden kann. Diese Halterung kann nun dazu benutzt werden, um den Paraffinblock mit der darin befindlichen Probe in einen Automaten oder Halbautomaten einzuspannen, mit dem gewünschte Gewebeschnitte aus der Probe herausgeschnitten werden können. Ein solcher Automat bzw. Halbautomat ist unter der Bezeichnung Mikrotom bekannt.

Vorzugsweise sind daher in einer Ausgestaltung Mikrotom und durchströmbarer Behälter so aufeinander abgestimmt, dass der Behälter ganz oder teilweise in das Mikrotom in genannter Weise eingespannt werden kann.

Sind histologische Untersuchungen durchgeführt worden und sollen nun Biomoleküle prozessiert werden, so ist regelmäßig zunächst das Paraffin von dem Teil der paraffinierten Probe zu entfernen, welches weiter prozessiert werden soll. Es werden also beispielsweise zur Untersuchung von Biomolekülen weitere Schnitte mit dem Mikrotom angefertigt. Diese Schnitte werden in einem Mikrozentrifugengefäß gesammelt und zunächst das Paraffin entfernt und zwar im Wesentlichen umgekehrt wie bei der Entwässerung. Es wird zunächst eine Intermediärlösung zugegeben, um das Paraffin aufzulösen. Anschließend wird die Gewebeprobe zentrifugiert und der Überstand mit dem in der Intermediärlösung aufgelösten Paraffin entfernt. Anschließend wird das pelletierte Gewebe mit reinem Alkohol resuspendiert, um die Intermediärlösung zu verdrängen. Nach einer erneuten Zentrifugation und Entfernung des Überstandes kann das Gewebepellet in einem geeigneten Lysepuffer aufgenommen und nach dem Stand der Technik prozessiert werden. Die gereinigten Biomoleküle können dann für die gewünschten Untersuchungen eingesetzt werden.

In einer vorteilhaften Ausgestaltung wird im Rahmen einer histologischen Untersuchung ein Mikroskop eingesetzt, welches mit einem Laser ausgestattet ist. Wird Gewebe mit Hilfe des Mikroskops histologisch untersucht und ein interessierender Bereich gefunden, so kann dieser Bereich mit dem Laser sehr genau herausgeschnitten werden. Mithilfe der vorliegenden Erfindung gelingt es nun besonders einfach, diesen herausgeschnittenen Bereich sofort in Bezug auf Biomoleküle weiter zu untersuchen, Ist der ausgeschnittene Bereich sehr klein, so kann dieser teil des Gewebes direkt in einen Lysepuffer überführt werden, um Biomoleküle wie DANN, RNA und/ oder Protein für weitergehende Untersuchungen zu isolieren.

In einer Ausgestaltung der Erfindung weist der durchströmbare Behälter, der die Dimension und zwar insbesondere die Dicke eines zu fixierenden Gewebes geeignet beschränkt, an einer Seite und zwar vorzugsweise an einer schmalen Seite eine scharfkantige Öffnung auf. Die scharfkantige Öffnung ist dafür vorgesehen, in eine zu fixierende und/ oder zu stabilisierende Probe gestoßen zu werden. Durch eine Drehbewegung kann der dann im durchströmbaren Behälter befindliche Teil der Probe abgetrennt und herausgezogen werden. Der durchströmbare Behälter ist dann seitlich bevorzugt mit Löchern und dergleichen beispielsweise siebartig ausgestaltet. Es befindet sich dann das Gewebe in einer für die Fixierung und / oder Stabilisierung besonders geeigneten Dimensionierung in dem durchströmbaren Behälter.

Der durchströmbare Behälter ist insbesondere bei der Ausgestaltung mit der scharfkantigen Öffnung an einem Deckel befestigt, mit dem ein Gefäß mit einem darin befindlichen Mittel für das Fixieren und/ oder Stabilisieren verschlossen wird. Der Deckel erfüllt dann eine Doppelfunktion. Er dient zum einen dem Verschließen des Gefäßes mit dem darin befindlichen Mittel für das Fixieren und/ oder Stabilisieren während der Fixierung bzw. Stabilisierung, die sich in der Regel wenigstens über mehrere Stunden erstreckt. Zum anderen dient der Deckel als Griff, um den durchströmbaren Behälter einfach in eine Probe hineinstoßen zu können. Auf diese Weise ist die Handhabung besonders einfach.

In einer Ausgestaltung der Erfindung ist der durchströmbare Behälter, der vorzugsweise ein scharfkantige Öffnung umfasst, mit einem Stempel versehen, der beispielsweise von oben durch einen als Griff dienenden Deckel hindurch in den durchströmbaren Behälter hineingeführt werden kann. Auf diese Weise gelingt es besonders einfach, in dem durchströmbaren Behälter befindliches Gewebe wieder herauszudrücken.

Dies ist insbesondere dann von Vorteil, wenn Biomoleküle sofort untersucht werden sollen, also im Anschluss an die Stabilisierung. Dann kann die stabilisierte Probe aus dem durchströmbaren Behälter durch den Stempel herausgedrückt werden und zwar vorzugsweise in die entsprechende Lösung hinein, mit der die Untersuchung der Biomoleküle begonnen wird. Im Allgemeinen handelt es sich zunächst um eine Pufferlösung, in die die Probe gegeben wird, von der Biomoleküle untersucht werden sollen.

Das Vorsehen eines Stempels ist auch deshalb von Vorteil, weil so definiert nur ein Teil der fixierten bzw. stabilisierten Probe aus dem durchströmbaren Behälter herausgedrückt werden kann. Dieser aus dem durchströmbaren Behälter dann herausstehender Teil der Probe kann dann abgeschnitten werden, um es beispielsweise der Untersuchung von Biomolekülen zuzuführen. Der Rest kann dann beispielsweise für histologische Untersuchungen verwendet werden.

Sollen Biomoleküle untersucht werden, so ist es grundsätzlich erforderlich, die Probe aufzuschließen und so zu homogenisieren. Dies geschieht nach dem Stand der Technik beispielsweise durch Ultraschall. Allerdings besteht beim Stand der Technik die Gefahr, dass dabei die interessierenden Moleküle beschädigt werden, In einer Ausgestaltung der Erfindung wird daher der durchströmbare Behälter mit der darin befindlichen stabilisierten Probe in ein weiteres Gefäß mit einer darin befindlichen Flüssigkeit gestellt, Eine Ultraschallquelle wird so platziert, dass Ultraschall zu dem durchströmbaren Behälter gelangt und zwar insbesondere fokussiert auf den durchströmbaren Behälter. Zerkleinert nun der Ultraschall die im durchströmbaren Behälter befindliche Probe, so können die zerkleinerten Gewebestücke durch geeignet durchlässige Wände des durchströmbaren Behälters hindurch in die Flüssigkeit entweichen, die beispielsweise das Mittel zur Stabilisierung sein kann. Auf diese Weise können zerkleinerte Stücke so entweichen, dass diese nicht mehr dem Ultraschall in einer nun nachteilhaften Weise ausgesetzt werden. Auf diese Weise wird das Risiko vermindert, dass die interessierenden Moleküle im Rahmen des Aufschlusses der Probe durch Überexposition in unerwünschter Weise beschädigt werden.

Bei der vorgenannten Ausgestaltung ist dann die Ultraschallquelle insbesondere so eingestellt und beschränkt, dass diese im Wesentlichen nur den durchströmbaren Behälter mit darin befindlicher Probe erfasst und in diesem Sinne auf den durchströmbaren Behälter fokussiert ist.

Grundsätzlich ist es möglich, anstelle von Ultraschall ein anderes Mittel zu wählen, welches die in dem durchströmbaren Behälter befindliche Probe aufschließt mit der Folge, dass hinreichend zerkleinerte Teile der Probe nach außen entweichen und von der weiteren mechanischen Behandlung damit vorteilhaft ausgeschlossen werden.

Die Erfindung wird anhand der nachfolgenden Figuren näher erläutert.

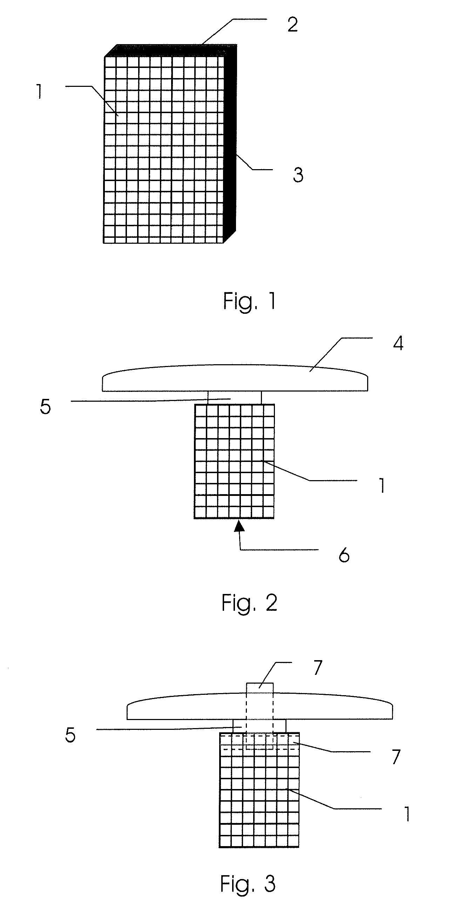

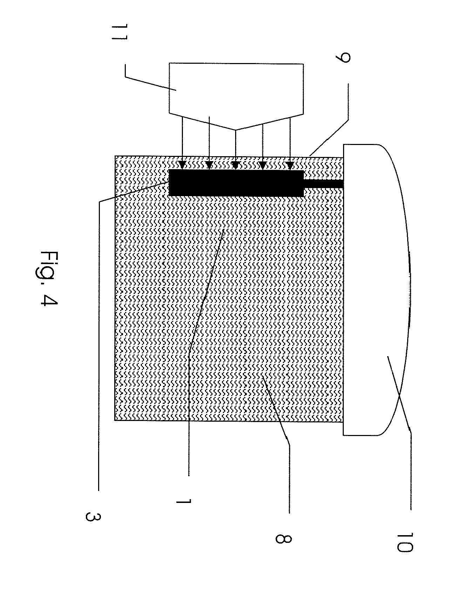

Figur 1 zeigt eine typische Grundform des durchströmbaren Behälters, der für das Fixieren einer Probe eingesetzt wird. Der Behälter umfasst eine relativ großflächige Vorderseite 1 und Rückseite, die beispielsweise gitterförmig sind und daher von einer Flüssigkeit durchströmt werden können. Die Vorderseite kann ein klappbarer Deckel sein und die Rückseite der Boden des durchströmbaren Behälters. Der Abstand zwischen Vorderseite und Rückseite ist relativ klein und beträgt nur wenige Millimeter und zwar insbesondere nicht mehr als 5 Millimeter. Dadurch wird sichergestellt, dass eine im durchströmbaren Behälter befindliche Probe von einer Fixierlösung hinreichend schnell durchtränkt werden kann. Die Wände 2 und 3 des durchströmbaren Behälters können ebenfalls durchströmbar sein. Aus Gründen der Stabilität ist sind aber feste, geschlossene Wände 2 und 3 zu bevorzugen.
Figur 2 zeigt eine seitliche Aufsicht auf den durchströmbaren Behälter mit Vorderwand 1 , der an einem Deckel 4 durch einen Steg 5 befestigt ist und zwar vorzugsweise lösbar, also zum Beispiel durch Formschluss, so zum Beispiel durch einrastende Kupplungsmittel. Der Deckel kann dann einerseits als Griff verwendet werden, um den durchströmbaren Behälter zu halten, ohne diesen zu verschmutzen oder umgekehrt ohne durch den Behälter bzw, dessen Inhalt verschmutzt zu werden. Andererseits kann der Deckel dem Verschließen eines Gefäßes mit darin befindlichem Mittel für das Fixieren und/oder Stabilisieren dienen, wenn der durchströmbare Behälter in eine entsprechende Flüssigkeit eingetaucht werden soll, Ist es für die Fixierung bzw. Stabilisierung erforderlich, eine Probe von einer Lösung zu einer nächsten zu transferieren, so kann die im durchströmbaren Behälter befindliche Probe mit Hilfe des Deckels transferiert werden, ohne das der durchströmbare Behälter geöffnet werden muss. Aufgrund einer lösbaren Befestigung kann der durchströmbare Behälter weiter verwendet werden, so zum Beispiel, um den durchströmbaren Behälter mit darin befindlicher fixierter bzw, stabilisierter Probe in einen entsprechend angepassten Entwässerungsautomaten zu überführen.

Bei der in Figur 2 gezeigten Ausführungsform ist die Unterseite 6 des Behälters vorzugsweise offen oder kann geöffnet werden. Die Ränder sind dann derart scharfkantig ausgebildet, dass diese Unterseite in eine typische Probe hineingestoßen werden kann, um so den Behälter mit Probenmaterial zu befüllen und zugleich das Probenmaterial geeignet zu dimensionieren.

In Figur 3 wird eine Ausführungsform mit einem Stempel 7 dargestellt, mit dem Probenmaterial aus dem durchströmbaren Behälter herausgedrückt werden kann.

Aus Kostengründen besteht der durchströmbare Behälter vorzugsweise aus Kunststoff. Es handelt sich dann insbesondere um einen Wegwerfartikel. Für jede neue Probe wird dann ein neuer, noch unbenutzter durchströmbarer Behälter verwendet, was die Handhabung vereinfacht.

Ein durchströmbarer Behälter kann aber auch aus Metall bestehen und zwar vor allem dann, wenn dieser eine scharfe Kante aufweisen soll, um in Gewebe hineinstoßen zu können.

Fig, 4 zeigt den Aufbau eines durchströmbaren Behälters mit einer darin befindlichen stabilisierten Probe, die in ein Gefäß mit einer darin befindlichen Flüssigkeit 8 eingetaucht ist, Der durchströmbare Behälter befindet sich nahe bei einer Gefäßwand 9 und ist vorzugsweise an dem Gefäßdeckel befestigt und zwar insbesondere lösbar und/ oder durch Formschluss. Eine Ultraschallquelle 1 1 ist so nahe dieser Gefäßwand 9 platziert und so dimensioniert, dass Ultraschall den durchströmbaren Behälter erreicht und ansonsten nicht weiter in das Gefäß gelangt, wie durch die Pfeile angedeutet wird. Ultraschall schließt so die im durchströmbaren Behälter befindliche Probe auf, die im Anschluss daran durch eine gitterförmige Wand hindurch in die Flüssigkeit 8 entweichen kann, die sich außerhalb des durchströmbaren Behälters befindet. Damit Ultraschall in den durchströmbaren Behälter gelangen kann, ist der Ultraschall so ausgerichtet, dass dieser auf eine durchströmbare Wand auftrifft.

## Patentansprüche

1. Verfahren für das Fixieren und/ oder Stabilisieren einer Probe, indem die Probe in einen durchströmbaren Behälter (1 , 2, 3) mit einer maximalen Bauhöhe von 10 mm, vorzugsweise von 5 mm gegeben wird, und der mit der Probe befüllte Behälter in Mittel für das Fixieren und/oder Stabilisieren eingetaucht und die Probe fixiert und/ oder stabilisiert wird.

2. Verfahren nach Anspruch 1, bei dem die Wände (1) des Behälters, die nicht mehr als 10 mm, vorzugsweise nicht mehr als 5 mm auseinander liegen, siebförmig, gitterförmig oder mit Schlitzen versehen sind.

3. Verfahren nach einem der vorhergehenden Ansprüche, bei dem im Anschluss an die Fixierung bzw. Stabilisierung die im durchströmbaren Behälter (1, 2, 3) befindliche, fixierte und/ oder stabilisierte Probe in einem Entwässerungsautomaten entwässert wird.

4. Verfahren nach einem der vorhergehenden Ansprüche, bei dem die Probe mit Mitteln behandelt wird, die sowohl die Morphologie des Gewebes der Probe fixiert als auch Biomoleküle der Probe zugleich stabilisiert.

5. Verfahren nach einem der vorhergehenden Ansprüche, bei dem die Probe mittels einer Polyol-haltigen Zusammensetzung fixiert und stabilisiert wird.

6. Verfahren nach einem der vorhergehenden Ansprüche, bei dem die Probe im Anschluss an die Entwässerung in Paraffin eingebettet wird und der durchströmbare Behälter (1, 2, 3) ganz oder teilweise mit diesem Paraffin verbunden wird.

7. Verfahren nach dem vorhergehenden Anspruch, bei dem der mit dem Paraffin verbundene Behälter bzw. Teil des Behälters in ein Mikrotom eingespannt wird.

8. Verfahren nach einem der vorhergehenden Ansprüche, bei dem die Probe im Anschluss an die Entwässerung in Paraffin eingebettet wird und Teile der in Paraffin eingebetteten Probe mit Hilfe eines Mikroskops untersucht werden.

9. Verfahren nach einem der vorhergehenden Ansprüche, bei dem die Probe im Anschluss an die Entwässerung in Paraffin eingebettet wird und Biomoleküle dieser Probe erforderlichenfalls nach Entfernen des Paraffins prozessiert werden.

10. Verfahren nach einem der vorhergehenden Ansprüche, bei dem die Probe im Anschluss an die Entwässerung in Paraffin eingebettet wird und Teile der in Paraffin eingebetteten Probe mit Hilfe eines Mikroskops untersucht werden, ein weiteres Teil dieser untersuchten Probe mit einem Laser herausgeschnitten wird und Biomoleküle des Teils der Probe prozessiert werden, welches mit dem Laser herausgeschnitten wurde.

11. Verfahren nach einem der vorhergehenden Ansprüche, bei dem der durchströmbare Behälter (1 , 2, 3) eine scharfkantige Öffnung (6) aufweist, die ein Gewebe gestoßen wird, im Anschluss daran der so in den durchströmbaren Behälter gebrachte Teil des Gewebes vom übrigen Gewebe abgetrennt wird und die so in den durchströmbaren Behälter gebrachte Probe fixiert wird.

12. Verfahren nach einem der vorhergehenden Ansprüche, bei dem die im durchströmbaren Behälter befindliche, stabilisierte Probe aufgeschlossen wird und zwar vorzugsweise durch Ultraschall, wobei sich die Probe während des Aufschlusses vorzugsweise in einer Flüssigkeit befindet.

13. Verfahren nach einem der vorhergehenden Ansprüche, bei der der Ultraschall so ausgerichtet und fokussiert ist, dass er im Wesentlichen nur den durchströmbaren Behälter erfasst.

14. Durchströmbarer Behälter zur Durchführung eines Verfahrens nach einem der vorhergehenden Ansprüche mit einer Bauhöhe von nicht mehr als 10 mm, vorzugsweise von nicht mehr als 5 mm.

15. Durchströmbarer Behälter nach dem vorhergehenden Anspruch mit einer scharfkantigen Öffnung, die sich vorzugsweise an einer schmalen Seite des Behälters befindet.

16. Durchströmbarer Behälter nach einem der beiden vorhergehenden Ansprüche mit einem damit vorzugsweise lösbar verbundenen Deckel (4).

17. Durchströmbarer Behälter nach einem der drei vorhergehenden Ansprüche mit einem Stempel (7) für das Herausdrücken einer Probe aus dem durchströmbaren Behälter.

18. Durchströmbarer Behälter nach einem der drei vorhergehenden Ansprüche mit einer im durchströmbaren Behälter befindlichen, nicht fixierten und nicht stabilisierten Probe.
